# EUROPEAN PATENT APPLICATION

(11) **EP 4 768 390 A1**
(43) Date of publication of application: **01.07.2026**
(21) Application number: 25220822.8
(22) Date of filing: 04.12.2025
(51) Int. Cl.: B64D 1/02, B64D 1/22

(54) **A RELEASE MECHANISM**

(30) Priority: 27.12.2024 TR 2024021143
(71) Applicant: Tusas- Turk Havacilik Ve Uzay Sanayii Anonim Sirketi, 06980 Ankara (TR)
(72) Inventor: KARAKOC, Bekir, Ankara (TR); SEVEN, Selim, Ankara (TR); KARALLI, Bora, Ankara (TR); HALIS, Haldun, Ankara (TR); CETIN, Burak, Ankara (TR)
(74) Representative: Berkkam, Ayfer

(57) **Abstract**

The invention relates to at least one load (2) carried on the aircraft (F), at least one carrying apparatus (3) attached to the aircraft (F) in a detachable manner enabling the load (2) to be carried on the aircraft (F), at least one body (4) located on the aircraft (F) and enabling the positioning of the carrying apparatus (3) on the aircraft (F), multiple holes (5) located on the body (4) and enabling equipment to be mounted on the body (4) by the user, at least one main pin (6) inserted into the hole (5) in a rotatable manner by the user and enabling the carrying of the carrying apparatus (3) by means of the body (4), at least one holder (7) located on the body (4) in a manner to be rotatable around the point where it is mounted and attached to the carrying apparatus (3) in a detachable manner, and a first state (I) in which the main pin (6) contacts the holder (7) from one end on the body (4), preventing the rotation of the holder (7) and enabling the carrying of the load (2) on the aircraft (F).

## Description

The invention relates to a mechanism enabling the dropping of test equipment and/or payloads carried by being suspended on aircraft, by being released from the aircraft.

Test equipment carried on rotary-wing aircraft is carried by being suspended downwards from the aircraft at a distance predetermined by the user and/or manufacturer in order not to be affected by the downwash effect formed by the movement of the aircraft blades. Flight tests performed of aircraft are safety-critical. There is a potential for the cables, which are suspended from the aircraft and on which test equipment is located, to strike the aircraft rotors due to their lengths. Therefore, the cutting and/or quick disconnection feature of the cables is a required necessity.

In United States patent document No. US6622605B1, which is included in the known state of the art a weapon unit retention and release system is described. In the system subject to the invention, a mechanical force acts on a suspension hook to ensure the separation of the suspension from the hook with zero retention force when the apparatus is in the open state. Furthermore, in case of the malfunction of the system, the rope hook of the present invention releases the rope cord that will use the weapon weight to open the hook when the apparatus is in the open or normal state. The cord hook of the apparatus locks is in the closed state only when the apparatus is in the closed state. The actuation unit operates in three different states. These states are the normal state, the actuated/locked state, and the open state.

Thanks to a release mechanism developed with this invention, foreign object damages that may occur due to loads carried by being suspended on the aircraft during the flight of the aircraft have been minimized.

Another object of this invention is to ensure the dropping of the loads carried by being suspended on the aircraft during the flight of the aircraft in a manner to be released from the aircraft, without the need for actions such as breaking and/or cutting.

The release mechanism defined in the first claim implemented to achieve the object of the invention and in the claims dependent on this claim comprises at least one load carried on the aircraft by being suspended from the aircraft, and at least one carrying apparatus enabling the load to be carried by being suspended from the aircraft at a distance predetermined by the user. The carrying apparatus is attached onto the aircraft in a detachable manner by means of a body. The body is positioned in a manner to be located inside the aircraft and/or on the aircraft. Multiple holes opened on the body are found in a manner to enable equipment assembly on the body by the user and/or manufacturer. At least one main pin is mounted on the body by being passed through the holes, in a detachable manner and in a manner to be rotatable and axially movable on the holes where it is mounted. The release mechanism comprises at least one holder contacting the main pin at one end and attached to the carrying apparatus in a detachable manner at the other end. The holder is mounted on the body and is positioned in a manner to be rotatable around the point where it is mounted. The holder is rotated on the body in a manner to disconnect its connection with the carrying apparatus. There is a first state (I) in which the holder is located in a manner to contact the main pin at one end and is connected to the carrying apparatus at the other end, thereby enabling the carrying of the load on the aircraft. **In** the first state (I), the main pin prevents the holder from rotating by applying a pushing force at the point where it contacts the holder. The rotation-preventing force generated by the main pin at the point where it contacts the holder for the purpose of preventing the rotation of the holder is proportional to the weight of the load carried by means of the carrying apparatus, and is located in a manner to prevent the holder from rotating from the point where it is connected. In this way, in the first state (I), the load can be carried on the aircraft by means of the carrying apparatus as long as the main pin is not triggered by the user.

The release mechanism subject to the invention comprises a second state (II) in which the main pin is rotated as a result of being triggered by the user and/or manufacturer, and as a result of this, the holder apparatus is rotated and its connection with the carrying apparatus is disconnected, and the load is dropped from the aircraft by being released from the aircraft. A first bracket and a second bracket enabling the main pin to be mounted on the body and located on the body in a manner to be mutually opposite to each other are found. The first bracket and the second bracket extend outwardly from the body in a manner to remain mutually opposite to each other. The main pin is mounted on the body in a detachable manner and in a rotatable manner by being passed through the holes located mutually on the first bracket and the second bracket. The release mechanism comprises at least one release lever connected to the main pin integrally from one end in a manner to extend outwardly from the main pin. The main pin is moved by the user and/or manufacturer on the body radially and axially, around the direction in which it extends and along the direction in which it extends, by means of the release lever. **In** the first state (I), the release lever connected to the main pin is located in a manner to contact the protrusion surface found on the first bracket. The protrusion surface is located on the surface of the first bracket mutually opposite to the second bracket, in a manner to extend from the first bracket towards the second bracket. The protrusion surface is located in a manner to partially cover the surface of the first bracket facing the second bracket. At least one sliding surface is located on the first bracket, in a manner to be sequential with the protrusion surface and in a manner to be mutually opposite to the second bracket. In the first state (I), the release lever is located in a manner to contact the protrusion surface. In the second state (II), to which the release lever is brought by being triggered by the user and/or manufacturer, the release lever contacts the sliding surface. While the release lever is being brought from the first state (I) to the second state (II), it is rotated around the direction in which the main pin extends, and it moves to the right or left along the direction in which the main pin extends due to the recess form formed from the protrusion surface towards the sliding surface. With the movement of the release lever from the protrusion surface towards the sliding surface, the main pin, to which the release lever is integrally connected, also moves along the direction in which it extends in a manner to approach the first bracket. As a result of the main pin approaching the first bracket, its contact with the holder is disconnected, and the holder rotates around the point where it is mounted on the body. The rotation of the holder around the point where it is connected on the body is ensured by the separation of the carrying apparatus from the surface where it is connected to the holder, via the pull-down force created by means of the load weight. As a result of the disconnection of the contact of the main pin with the holder, the balancing force balancing the force created by the load on the holder is eliminated. In this way, the load and the carrying apparatus come from the first state (I) to the second state (II) and become free in a manner to be moved away from the aircraft.

**In** one embodiment of the invention, the release mechanism comprises at least one control unit located on and/or inside the aircraft, to which data collected from sensors located on the aircraft during flight is transmitted and/or where it is analyzed. The transfer from the load to the control unit for the purpose of analyzing the airflow to which the load is subjected during flight is provided by at least one transmission hose. The transmission hose extends to the load at one end and extends into the body by extending along the carrying apparatus at the other end. The body is mounted on the floor inside the aircraft or on a plate located on the floor. At least one opening is located on the floor. Thanks to the opening, it is enabled that the transmission hose extends from the load to the inside of the aircraft. The fluid carried into the aircraft by means of the transmission hose from the load is transferred to the control unit by means of at least one connection hose. The connection hose is connected to the transmission hose at one end and to the control unit at the other end in a detachable manner. The connection hose is kept in a manner to remain almost completely inside the aircraft. The connection hose and the transmission hose are mounted to each other in a detachable manner by means of at least one connector. **In** this way, the transmission hose, one end of which extends into the aircraft, and the connection hose located inside the aircraft enable the transfer of the fluid transmitted from the load to the control unit in a lossless manner.

**In** one embodiment of the invention, the release mechanism comprises a connector having a diameter larger than the diameter of the opening located on the floor, being of a size that cannot pass through the opening. As a result of the rotation of the release lever by the user and/or manufacturer, and as a result of the moving of the main pin in a manner to come from the first state (I) to the second state (II), the carrying apparatus is released by being separated from the aircraft and the body. In this case, the transmission hose located on the carrying apparatus is also pulled down through the opening simultaneously together with the load. Thanks to the connector which is pneumatic and used in a manner to have a diameter larger than the opening diameter, the connection between the connection hose and the transmission hose is disconnected when the end of the transmission hose located inside the aircraft is pulled to the opening. The floor walls located on the opening apply pressure onto the pneumatic connector in a manner to compress it when the connector which is pneumatic is pulled to the opening. **In** this way, the pneumatic connector opens by being triggered and ensures the separation of the transmission hose from the connection hose. In this way, since the load is released without the need for the transmission hose to be broken or cut, it can be moved away from the aircraft by coming out of the body. In cases where multiple transmission hoses are connected to multiple connection hoses, the connectors have a diameter of a size that cannot pass through the opening together.

**In** one embodiment of the invention, the release mechanism comprises a holder which is in the form of a hook. At least one connection apparatus is located on the carrying apparatus in a manner to enable it to be carried on the aircraft in the first state (I). A recess is located at the end of the connection apparatus close to the holder. **In** this way, in the first state (I), the tip of the holder in the form of a hook is placed into the recess, ensuring the carrying of the load, the connection apparatus, and the carrying apparatus on the aircraft. The other end of the holder is located in a manner to contact the tip of the main pin in the first state (I). In the first state (I), the release lever is located in a manner to contact the protrusion surface. In this way, the force created by the load in the direction of the rotation of the holder is balanced by the release lever contacting the protrusion surface and by preventing the main pin from moving along the direction in which it extends. **In** this way, the remaining of the holder inside the recess and the carrying of the load on the aircraft for a period predetermined by the user and/or manufacturer are ensured. With the triggering and rotation of the release lever by the user and/or manufacturer and its being moved from the protrusion surface towards the sliding surface, the holder rotates around the point where it is mounted by pushing the main pin from its surface contacting the main pin and/or by the disconnection of its contact with the main pin. In this way, the holder comes out of the recess and ensures the passing of the load, the connection apparatus, and the carrying apparatus to the second state (II).

**In** one embodiment of the invention, the release mechanism comprises at least one sliding axis on which the main pin is located and which is the direction in which the main pin extends. When passing from the first state (I) to the second state (II), the main pin moves in a manner to be rotated around the sliding axis and along the sliding axis. The release mechanism comprises at least one safety pin positioned on the holes located mutually on the first bracket and the second bracket in the first state (I). In the first state (I), the safety pin is positioned in a manner to contact the release lever for the purpose of preventing the release lever from rotating around the sliding axis. **In** this way, the release lever cannot be triggered from the first state (I) to the second state (II) as long as the safety pin is not removed from the holes and taken away by the user and/or manufacturer. In this way, the load is carried on the aircraft for a period predetermined by the user and/or manufacturer.

**In** one embodiment of the invention, the release mechanism comprises at least one safety trigger lever positioned inside the aircraft at a distance accessible by the user or the pilot, connected to the safety pin at one end. As a result of the pulling of the safety trigger lever by the user or the pilot, the safety pin to which it is connected at the other end is also pulled and removed from the holes. **In** this way, it becomes possible for the release lever to rotate around the sliding axis.

**In** one embodiment of the invention, the release mechanism comprises at least one triggering lever positioned inside the aircraft at a distance accessible by the user or the pilot, connected to the release lever at one end. As a result of the pulling of the triggering lever by the user or the pilot, the release lever, to which it is connected at the other end, is rotated around the sliding axis in a manner to rotate and slide the main pin. In this way, the passing of the main pin and the load from the first state (I) to the second state (II) is ensured.

**In** one embodiment of the invention, the release mechanism comprises at least one stopping pin positioned into the holes located mutually on the first bracket and the second bracket and located on the body in a manner to be almost completely parallel to the sliding axis and the main pin. The stopping pin is located on the body at a distance predetermined by the user from the main pin and in a manner to be on the sliding surface at one end. In this way, the release lever is stopped in order not to impact the body when it is brought to the second state (II) after being triggered.

**In** one embodiment of the invention, the release mechanism comprises at least one steel rope located inside the aircraft and connected to the triggering lever at one end and to the release lever at the other end. Thanks to the steel rope, as a result of the pulling of the triggering lever by the user and/or the pilot, the end of the steel rope connected to the release lever is also pulled, ensuring the moving of the release lever and the main pin in a manner to rotate in the radial direction around the sliding axis.

**In** one embodiment of the invention, the release mechanism comprises a steel rope located inside the aircraft and connected to the safety trigger lever at one end and to the safety pin at the other end. As a result of the pulling of the safety trigger lever and triggering levers by the user and/or the pilot, thanks to the steel ropes located in a manner to extend lengthwise inside the body, the safety pin is removed from the holes, and the moving of the release lever is ensured.

**In** one embodiment of the invention, the release mechanism, for the purpose of enabling the main pin and the load to be brought from the first state (I) to the second state (II);
- First, by pulling the safety trigger lever by the user and/or the pilot, the safety pin is removed from the holes by being pulled towards the user and/or the pilot by means of the steel rope.
- As a result of the removal of the safety pin from the body, the release lever becomes triggerable in the first state (I). As a result of the pulling of the triggering lever by the user and/or the pilot, the release lever is also triggered by means of the steel ropes and rotates around the sliding axis.
- The release lever, located on the body in a manner to contact the protrusion surface in the first state (I), moves towards the sliding surface located on the first bracket in a recess form relative to the protrusion surface, by being rotated around the sliding axis with the pulling of the triggering lever. As a result of this, the main pin, which is connected to the release lever in a manner to be integral, is also rotated and is slid in a manner to be linear on the sliding axis thanks to the sliding surface in the recess form, and passes to the second state (II).
- With the gradual moving of the release lever from the protrusion surface to the sliding surface in the form of a recess, the holder passes to a rotatable freedom around the point where it is connected to the body, with the pulling force created by the load on it. **In** this way, the holder in the form of a hook is removed from inside the recess, and the carrying apparatus and the load become free to pass to the second state (II).
- When the load and the carrying apparatus passing to the second state (II) become free, the transmission hose located on the carrying apparatus and extending into the body is pulled together with the load. As a result of this, the transmission hose is pulled together with the connection hose to the opening enabling access to the inside of the body. When the pneumatic connector connecting the transmission hose and the connection hose to each other in the first state (I) is pulled to the opening, the opening of the pneumatic connectors is ensured by being compressed in the opening hole. In the case of there being multiple connectors, the pneumatic connectors open by being triggered with the opening by the compression applied by the connectors to each other and by the opening walls located on the floor, or in the case of there being a single connector, thanks to the compression applied by the opening walls located on the floor to the connector which is of a size that cannot pass through the opening. In this way, when the load, the main pin, and the holder are brought to the second state (II), the connection of the transmission hose and the connection hose on the opening is disconnected in a safe manner using only the size difference between the opening and the connectors.

**In** one embodiment of the invention, the release mechanism comprises a load in and/or on which a pitot tube is located. **In** this way, the airflow to which the load kept by being suspended during the flight of the aircraft is subjected is transmitted to the control unit by means of the transmission hose and the connection hose.

**In** one embodiment of the invention, the release mechanism comprises an aircraft which is manned and/or unmanned, and fixed-wing and/or rotary-wing. The load is suspended from the aircraft in a manner not to pose a risk to the aircraft flight and in a manner to be at a distance.

The release mechanism implemented to achieve the object of this invention is shown in the attached figures, and of these figures;
Figure 1 - The perspective view of the release mechanism and the body.
Figure 2 - The perspective view of the aircraft, the carrying apparatus, and the load.
Figure 3 - The side view of the floor, control unit, body, hole, transmission hose, connection hose, and connector.
Figure 4 - The front view of the release lever, the sliding axis, the protrusion surface, the sliding surface, the first bracket, and the second bracket.
Figure 5 - The perspective view of the main pin and the stopping pin.
Figure 6 - The perspective view of the connector, the connection hose, the opening, and the connection apparatus.
Figure 7 - The front view of the holder, the main pin, the protrusion surface, and the sliding surface in the first state (I).
Figure 8 - The front view of the holder, the main pin, the protrusion surface, and the sliding surface in the second state (II).
Figure 9 - The perspective view of the steel rope, the safety trigger lever, and the triggering lever.
Figure 10 - The perspective view of the steel rope, the safety trigger lever, the triggering lever, the release lever, and the body.
Figure **11** - The perspective view of the transmission hose, the connection hose, the main pin, the control unit, the connection apparatus, the holder, the second bracket, the safety pin, the opening, and the connector.
Figure 12 - The perspective view of the main pin, the holder, the connector, the transmission hose, the connection hose, and the opening.

The parts located in the figures are individually numbered, and the counterparts of these numbers are given below.
1. A Release Mechanism
2. Load
3. Carrying Apparatus
4. Body
5. Hole
6. Main Pin
7. Holder
8. First Bracket
9. Second Bracket
10. Release Lever
11. Protrusion Surface
12. Sliding Surface
13. Control Unit
14. Transmission Hose
   1401. Connection Hose
15. Connector
16. Connection Apparatus
17. Recess
18. Safety Pin
19. Safety Trigger Lever
20. Triggering Lever
21. Stopping Pin
22. Steel Rope
(I) First State
(II)Second State
(Z) Floor
(E) Sliding Axis
(F) Aircraft
(A) Opening

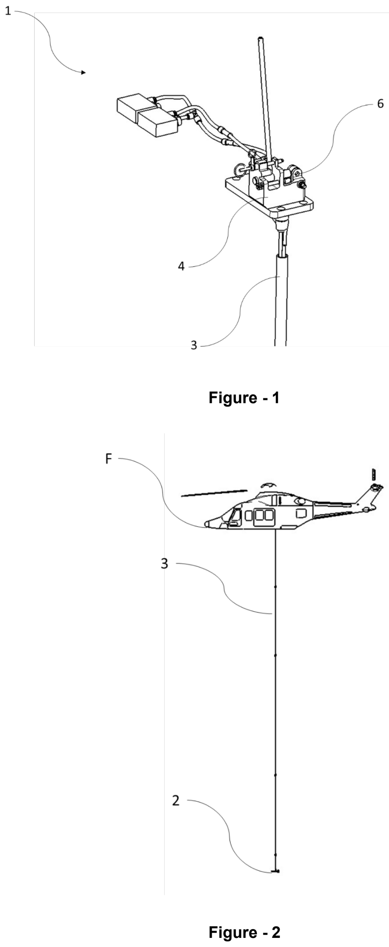

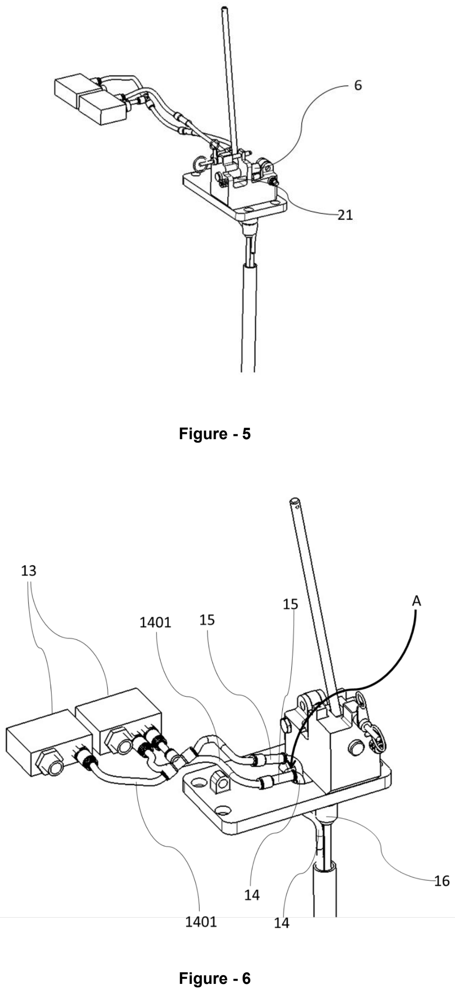

The release mechanism (1) comprises; at least one load (2) carried on the aircraft (F), at least one carrying apparatus (3) attached to the aircraft (F) in a detachable manner, enabling the load (2) to be carried on the aircraft (F), at least one body (4) located on the aircraft (F) and enabling the positioning of the carrying apparatus (3) on the aircraft (F), multiple holes (5) located on the body (4) and enabling equipment to be mounted on the body (4) by the user, at least one main pin (6) inserted into the hole (5) in a rotatable manner by the user and enabling the carrying of the carrying apparatus (3) by means of the body (4), at least one holder (7) located on the body (4) in a manner to be rotatable around the point where it is mounted and attached to the carrying apparatus (3) in a detachable manner, a first state (I) in which the main pin (6) contacts the holder (7) from one end on the body (4), preventing the rotation of the holder (7) and enabling the carrying of the load (2) on the aircraft (F). (Figure 1, Figure 2, Figure 3, Figure 4, Figure 5)

The release mechanism (1) subject to the invention, comprises; a second state (II) in which the holder (7) is rotated and the load (2) is moved away from the aircraft (F) with the sliding of the main pin (6) along the direction in which it extends by being triggered by the user, a first bracket (8) and a second bracket (9) located on the body (4) in a manner to remain mutually opposite to each other and enabling the main pin (6) positioned on them to be attached onto the body (4) in a detachable manner, at least one release lever (10) located on the main pin (6) in a manner to extend outwardly from the main pin (6) and enabling the main pin (6) to be rotated around the direction in which it extends lengthwise with its triggering by the user, at least one protrusion surface (11) being the surface where the release lever (10) contacts the first bracket (8) in the first state (I) and extending from the first bracket (8) towards the second bracket (9), at least one sliding surface (12) having a recess form, being the surface where the release lever (10) contacts on the first bracket (8) in the second state (II), the main pin (6) enabling the rotation of the holder (7) and enabling the disconnection of the contact of the holder (7) with the carrying apparatus (3) with the moving of the release lever (10) from the protrusion surface (11) towards the sliding surface (12) by being moved by the user, thereby ensuring the bringing of the load (2) from the first state (I) to the second state (II). (Figure 1, Figure 2, Figure 3, Figure 4, Figure 5)

Connection apparatus are used for the purpose of connecting external loads carried on the aircraft (F) to aircraft in a detachable manner. The end of the connection apparatus connected onto the aircraft (F) is mounted in a detachable manner by means of the body (4). The main pin (6) mounted into the holes (5) located on the body (4) is mounted, and at least one holder (7) is located on the body (4) in a manner to contact the main pin (6) and in a manner to be rotatable from the point where it is connected. The connection apparatus (16) and the load (2) can be carried on the aircraft (F) thanks to the holder (7) by means of the main pin (6). **In** the first state (I), the main pin (6) is located in a manner to contact the holder (7) at one end, [and] the holder (7) [is located] in a manner to contact the connection apparatus (16) in a manner to enable the carrying of the carrying apparatus (3) on the body (4). **In** this way, in the first state (I), the load (2) can be carried on the aircraft (F) in a manner to be suspended from the aircraft (F) for a period predetermined by the user and/or manufacturer.

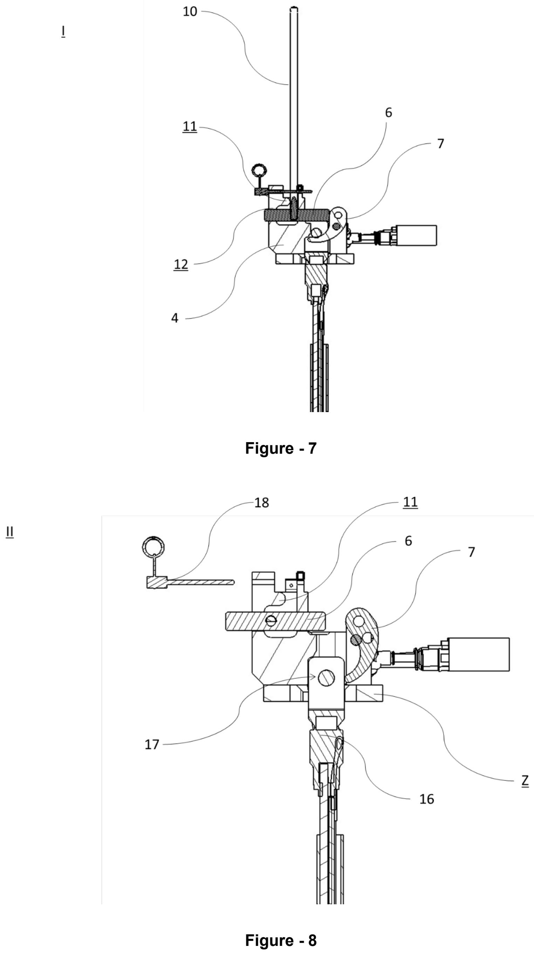

A first bracket (8) and a second bracket (9) enabling the main pin (6) to be mounted on the body (4) and located on the body (4) in a manner to be mutually opposite to each other are found. The first bracket (8) and the second bracket (9) extend outwardly from the body (4) in a manner to remain mutually opposite to each other. The main pin (6) is mounted onto the body (4) in a detachable manner and in a rotatable manner by being passed through the holes (5) located mutually on the first bracket (8) and the second bracket (9). The release mechanism (1) comprises at least one release lever (10) connected to the main pin (6) in a manner to be integral from one end, in a manner to extend outwardly from the main pin (6). The main pin (6) is moved by the user and/or manufacturer on the body (4) radially and axially, around the direction in which it extends and along the direction in which it extends, by means of the release lever (10). In the first state (I), the release lever (10) connected to the main pin (6) is located in a manner to contact the protrusion surface (11) located on the first bracket (8). While the release lever (10) is being brought from the first state (I) to the second state (II), it is rotated around the direction in which the main pin (6) extends, and it moves to the right or left along the direction in which the main pin (6) extends due to the recess form formed from the protrusion surface (11) towards the sliding surface (12). Thanks to the movement of the release lever (10) from the protrusion surface (11) towards the sliding surface (12), the main pin (6), to which the release lever (10) is integrally connected, also moves along the direction in which it extends in a manner to approach the first bracket (8). As a result of the main pin (6) approaching the first bracket (8), its contact with the holder (7) is disconnected, and the holder (7) rotates around the point where it is mounted on the body (4). (Figure 1, Figure 2, Figure 3, Figure 4, Figure 5, Figure 6, Figure 7, Figure 8)

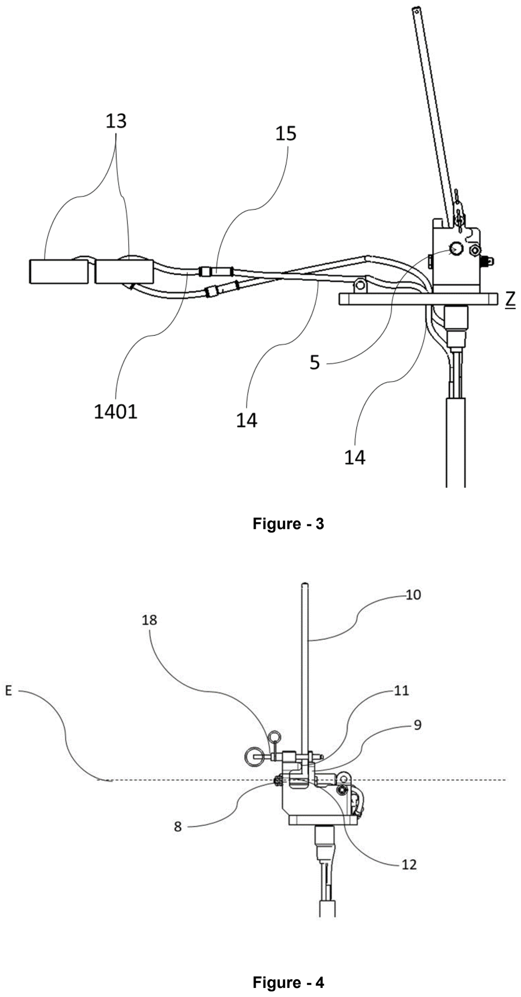

**In** one embodiment of the invention, the release mechanism (1) comprises; a carrying apparatus (3) enabling the load (2) to be carried by being suspended from the aircraft (F) in the first state (I), at least one control unit (13) located on the aircraft (F) and where aircraft (F) flight data is collected and/or analyzed, at least one transmission hose (14) located on the carrying apparatus (3) in a manner to extend between the load (2) and the control unit (13) and enabling the transfer of the airflow to which the load (2) is subjected to the control unit (13), at least one floor (Z) enabling the positioning of the body (4) inside the aircraft (F) and on which the body (4) is mounted in a detachable manner, at least one opening (A) located on the floor (Z) and enabling the access of the transmission hose (14) to the inside of the aircraft (F), at least one connection hose (1401) connected to the control unit (13) at one end and to the transmission hose (14) at the other end, at least one connector (15) ensuring that the transmission hose (14) is attached partially and the connection hose (1401) is attached almost completely inside the aircraft (F) to each other in a detachable manner in the first state (I), thereby enabling the transfer of the fluid transmitted from the load (2) to the control unit (13). The transfer from the load (2) to the control unit (13) for the purpose of analyzing the airflow to which the load (2) is subjected during flight is provided by at least one transmission hose (14). The transmission hose (14) extends to the load (2) at one end and extends into the body (4) by extending along the carrying apparatus (3) at the other end. The body (4) is mounted on the floor (Z) inside the aircraft (F) or on a plate located on the floor (Z). At least one opening (A) is located on the floor (Z). Thanks to the opening (A), it is enabled that the transmission hose (14) extends from the load (2) to the inside of the aircraft. The fluid carried into the aircraft (F) by means of the transmission hose (14) from the load (2) is transferred to the control unit (13) by means of at least one connection hose (1401). The connection hose (1401) is connected to the transmission hose (14) at one end and to the control unit (13) at the other end in a detachable manner. The connection hose (1401) and the transmission hose (14) are mounted to each other in a detachable manner by means of at least one connector (15). **In** this way, the transmission hose (14), one end of which extends into the aircraft (F), and the connection hose (1401) located inside the aircraft (F) enable the transfer of the fluid transmitted from the load (2) to the control unit (13) in a lossless manner. (Figure 3, Figure 4, Figure 5, Figure 6, Figure 7, Figure 8)

In one embodiment of the invention, the release mechanism (1) comprises a connector (15) which is pneumatic, having a diameter larger than the diameter of the opening (A), pulled to the opening (A) with the release of the carrying apparatus (3) when the main pin (6) is brought from the first state (I) to the second state (II) by the user, enabling the connection of the transmission hose (14) with the connection hose (1401) to be disconnected and separated from each other by being compressed in the opening (A) due to the diameter difference, thereby enabling the carrying apparatus (3) to be moved away from the aircraft (F) together with the transmission hose (14). As a result of the rotation of the release lever (10) by the user and/or manufacturer, and as a result of the moving of the main pin (6) in a manner to come from the first state (I) to the second state (II), the carrying apparatus (3) is released by being separated from the aircraft (F) and the body (4). In this case, the transmission hose (14) located on the carrying apparatus (3) is also pulled down through the opening (A) simultaneously together with the load (2). Thanks to the connector (15) which is pneumatic and used in a manner to have a diameter larger than the diameter of the opening (A), the connection of the connection hose (1401) with the transmission hose (14) is disconnected when the end of the transmission hose (14) located inside the aircraft (F) is pulled to the opening (A). The floor (Z) walls located on the opening (A) apply pressure onto the connector (15) which is pneumatic in a manner to compress the connector (15) when the connector (15) which is pneumatic is pulled to the opening (A). In this way, the connector (15) which is pneumatic opens by being triggered and ensures the separation of the transmission hose (14) from the connection hose (1401). In this way, the transmission hose (14) is moved away from the aircraft (F) by coming out of the body (4) towards the outside, since the load (2) is released without the need for the transmission hose (14) to be broken or cut.

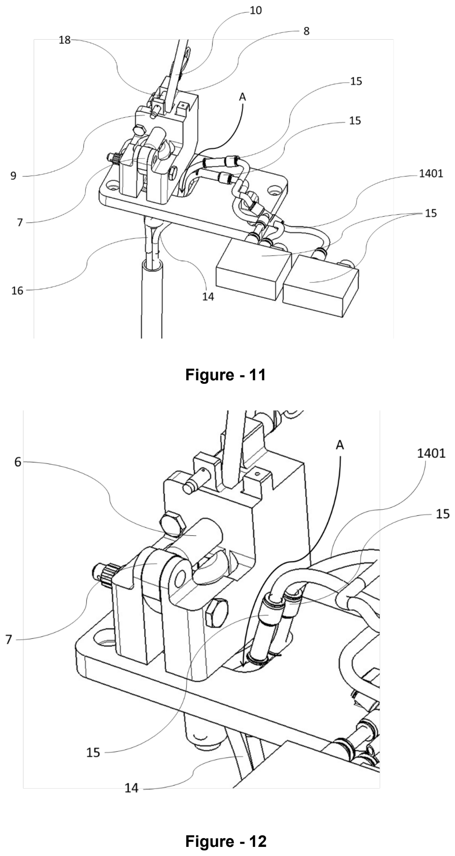

In one embodiment of the invention, the release mechanism (1) comprises a holder (7) which is in the form of a hook, at least one connection apparatus (16) located on the carrying apparatus (3) and enabling the carrying of the load (2) on the body (4) in the first state (I) by mounting the carrying apparatus (3) onto the aircraft (F), and at least one recess (17) located on the connection apparatus (16) and enabling the holder (7) to carry the connection apparatus (16) by being attached onto the connection apparatus (16) in a manner to be releasable in the first state (I). In the first state (I), the release lever (10) is located in a manner to contact the protrusion surface (11). In this way, the force created by the load (2) which would enable the rotation of the holder (7) is balanced by the release lever (10) contacting the protrusion surface (11) and by preventing the main pin (6) from moving along the direction in which it extends. In this way, the remaining of the holder (7) inside the recess (17) and the carrying of the load (2) on the aircraft (F) for a period predetermined by the user and/or manufacturer are ensured. With the triggering and rotation of the release lever (10) by the user and/or manufacturer and its moving from the protrusion surface (11) towards the sliding surface (12), the holder (7) comes out of the recess (17) by rotating around the point where it is mounted by the disconnection of its surface contacting the main pin (6), and ensures the passing of the load (2), the connection apparatus (16), and the carrying apparatus (3) to the second state (II). (Figure **11,** Figure 12)

**In** one embodiment of the invention, the release mechanism (1) comprises a sliding axis (E) on which the main pin (6) is located and which is the direction in which the main pin (6) extends, and at least one safety pin (18) located on the holes (5) found on the first bracket (8) and the second bracket (9) in the first state (I), located in a manner to contact the release lever (10), thereby ensuring that the main pin (6) remains fixed in the first state (I). **In** the first state (I), the safety pin (18) is positioned in a manner to contact the release lever (10) for the purpose of preventing the release lever (10) from rotating around the sliding axis (E). In this way, the release lever (10) cannot be triggered to pass from the first state (I) to the second state (II) as long as the safety pin (18) is not removed from the holes (5) and taken away by the user and/or manufacturer. In this way, the load (2) is carried on the aircraft (F) for a period predetermined by the user and/or manufacturer.

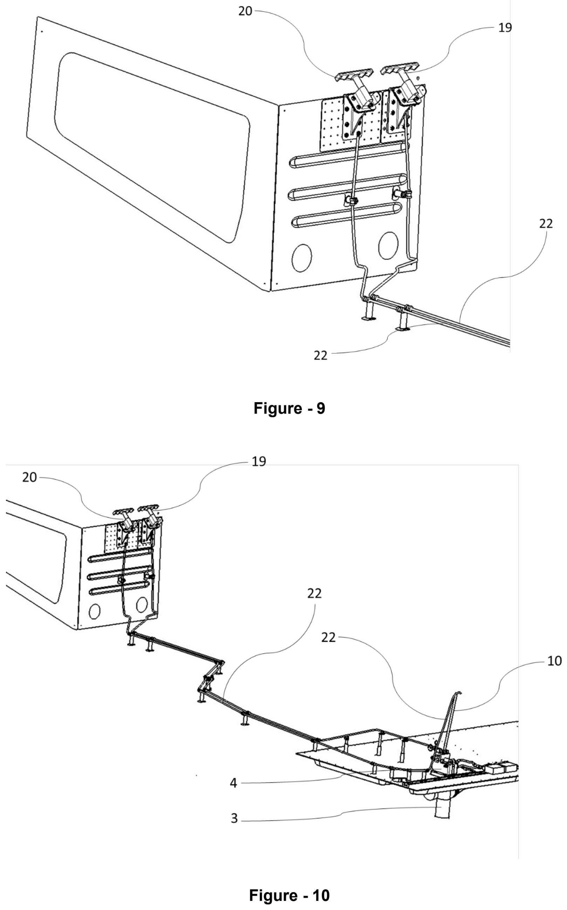

**In** one embodiment of the invention, the release mechanism (1) comprises at least one safety trigger lever (19) positioned on the aircraft (F) at a distance accessible by the user, enabling the moving of the release lever (10) in this way by ensuring the removal of the safety pin (18) from the holes (5) by being triggered by the user/pilot. As a result of the pulling of the safety trigger lever (19) by the user or the pilot, the safety pin (18), to which it is connected at the other end, is also pulled and removed from the holes (5). In this way, it becomes possible for the release lever (10) to rotate around the sliding axis. (Figure 9, Figure 10)

**In** one embodiment of the invention, the release mechanism (1) comprises at least one triggering lever (20) located on the aircraft (F) at a distance accessible by the user, enabling the moving of the release lever (10) by being triggered by the user and/or pilot, thereby enabling the main pin (6) to come from the first state (I) to the second state (II) and the load (2) to be dropped from the aircraft (F). With the pulling of the triggering lever (20) by the user or the pilot after the safety trigger lever (19), the release lever (10), to which the triggering lever (20) is connected at the other end, is rotated around the sliding axis (E) in a manner to rotate and slide the main pin (6). In this way, the passing of the main pin (6) and the load (2) from the first state (I) to the second state (II) is ensured. (Figure 9, Figure 10)

**In** one embodiment of the invention, the release mechanism (1) comprises at least one stopping pin (21) positioned inside the holes (5) on the first bracket (8) and the second bracket (9) in a manner to be parallel to the main pin (6) on the body (4), enabling the limiting of the movement of the release lever (10) in a range predetermined by the user when the main pin (6) is brought to the second state (II). The stopping pin (21) is located on the body (4) at a distance predetermined by the user from the main pin (6) and in a manner to be on the sliding surface (12) at one end. In this way, the release lever (10) is stopped in order not to impact the body (4) when it is brought to the second state (II) after being triggered.

**In** one embodiment of the invention, the release mechanism (1) comprises at least one steel rope (22) located on the aircraft (F), connected to the triggering lever (20) at one end and to the release lever (10) at the other end along the direction in which it extends lengthwise, enabling the rotation of the release lever (10) with the moving of the triggering lever (20) by the user. Thanks to the steel rope (22) being located between the triggering lever (20) and the release lever (10), as a result of the pulling of the triggering lever (20) by the user and/or pilot, the end of the steel rope (22) connected to the release lever (10) is also pulled, ensuring the moving of the release lever (10) and the main pin (6) in a manner to rotate in the radial direction around the sliding axis (E).

**In** one embodiment of the invention, the release mechanism (1) comprises a steel rope (22) located on the aircraft (F), connected to the safety trigger lever (19) at one end and to the safety pin (18) at the other end along the direction in which it extends lengthwise, enabling the removal of the safety pin (18) from the holes (5) by being moved with the pulling of the safety trigger lever (19) by the user. Thanks to the moving of the steel ropes (22), the safety pin (18) is removed from the holes (5), and the moving of the release lever (10) is ensured.

**In** one embodiment of the invention, the release mechanism (1) comprises:
- the separation of the safety pin (18) from the body (4) by coming out of the holes (5) by means of the steel rope (22) with the pulling of the safety trigger lever (19) by the user,
- the triggering lever (20) triggered by being pulled by the user as a result of the separation of the safety pin (18) from the body (4),
- the release lever (10) rotated around the sliding axis (E) on the body (4) by means of the steel ropes (22) with the pulling of the triggering lever (20) to pass from the first state (I) to the second state (II),
- the main pin (6) rotating around the sliding axis (E) simultaneously with the rotation of the release lever (10) and moving linearly along the sliding axis to pass from the first state (I) to the second state (II) with the moving of the release lever (10) from the protrusion surface (11) towards the sliding surface (12),
- the holder (7) rotating around the point where it is connected to the body (4) by coming out of the recess (17) by means of the pulling force applied by the carrying apparatus (3) with the gradual moving of the main pin (6) from the protrusion surface (11) to the sliding surface (12) in the form of a recess, and enabling the linear movement of the main pin (6) along the sliding axis (E),
- the connector (15) enabling the separation of the transmission hose (14) from the connection hose (1401) on the opening (A) with the release of the carrying apparatus (3) and enabling its dropping from the aircraft (F) together with the carrying apparatus (3). With the gradual moving of the release lever (10) from the protrusion surface (11) to the sliding surface (12) in the form of a recess, the holder (7) passes to a rotatable freedom around the point where it is connected to the body (4) with the pulling force created by the load (2) on it. **In** this way, the holder (7) in the form of a hook is removed from inside the recess (17), and the carrying apparatus (3) and the load (2) become free to pass to the second state (II). When the connector (15) which is pneumatic connecting the transmission hose (14) and the connection hose (1401) to each other in the first state (I) is pulled to the recess (17), the opening of the connectors (15) is ensured by being compressed in the recess (17). The connectors (15) which are pneumatic open by being triggered thanks to the compression applied by the walls of the opening (A) located on the floor (Z) onto the connector (15) which is of a size that cannot pass through the opening (A). In this way, when the load (2), the main pin (6), and the holder (7) are brought to the second state (II), the connection of the transmission hose (14) and the connection hose (1401) on the opening (A) is disconnected in a safe manner using only the size difference between the opening (A) and the connectors (15). (Figure 1, Figure 2, Figure 3, Figure 4, Figure 5, Figure 6, Figure 7, Figure 8, Figure 9, Figure 10, Figure 11, Figure 12)

In one embodiment of the invention, the release mechanism (1) comprises a load (2) in which a pitot tube is located, thereby enabling the transfer of the airflow to which it is subjected to the control unit (13). In this way, the airflow to which the load (2) kept by being suspended during the flight of the aircraft (F) is subjected is transmitted to the control unit (13) by means of the transmission hose (14) and the connection hose (1401).

In one embodiment of the invention, the release mechanism (1) comprises an aircraft (F) which is manned and/or unmanned, and fixed-wing and/or rotary-wing.

## Claims

1. A release mechanism (1) **comprising** at least one load (2) carried on the aircraft (F); at least one carrying apparatus (3) attached to the aircraft (F) in a detachable manner, enabling the load (2) to be carried on the aircraft (F); at least one body (4) located on the aircraft (F) and enabling the positioning of the carrying apparatus (3) on the aircraft (F); multiple holes (5) located on the body (4) and enabling equipment to be mounted on the body (4) by the user; at least one main pin (6) inserted into the hole (5) in a rotatable manner by the user and enabling the carrying of the carrying apparatus (3) by means of the body (4); at least one holder (7) located on the body (4) in a manner to be rotatable around the point where it is mounted and attached to the carrying apparatus (3) in a detachable manner; a first state (I) in which the main pin (6) contacts the holder (7) from one end on the body (4), preventing the rotation of the holder (7) and enabling the carrying of the load (2) on the aircraft (F), **characterized by** comprising; a second state (II) in which the holder (7) is rotated and the load (2) is moved away from the aircraft (F) with the sliding of the main pin (6) along the direction in which it extends by being triggered by the user, a first bracket (8) and a second bracket (9) located on the body (4) in a manner to remain mutually opposite to each other and enabling the main pin (6) positioned on them to be attached onto the body (4) in a detachable manner, at least one release lever (10) located on the main pin (6) in a manner to extend outwardly from the main pin (6) and enabling the main pin (6) to be rotated around the direction in which it extends lengthwise with its triggering by the user, at least one protrusion surface (11) being the surface where the release lever (10) contacts the first bracket (8) in the first state (I) and extending from the first bracket (8) towards the second bracket (9), at least one sliding surface (12) having a recess form, being the surface where the release lever (10) contacts on the first bracket (8) in the second state (II), the main pin (6) enabling the rotation of the holder (7) and enabling the disconnection of the contact of the holder (7) with the carrying apparatus (3) with the moving of the release lever (10) from the protrusion surface (11) towards the sliding surface (12) by being moved by the user, thereby ensuring the bringing of the load (2) from the first state (I) to the second state (II).

2. The release mechanism (1) according to claim 1, **characterized in that** it comprises; a carrying apparatus (3) enabling the load (2) to be carried by being suspended from the aircraft (F) in the first state (I), at least one control unit (13) located on the aircraft (F) and where aircraft (F) flight data is collected and/or analyzed, at least one transmission hose (14) located on the carrying apparatus (3) in a manner to extend between the load (2) and the control unit (13) and enabling the transfer of the airflow to which the load is subjected to the control unit (13), at least one floor (Z) enabling the positioning of the body (4) inside the aircraft (F) and on which the body (4) is mounted in a detachable manner, at least one opening (A) located on the floor (Z) and enabling the access of the transmission hose (14) to the inside of the aircraft (F), at least one connection hose (1401) connected to the control unit (13) at one end and to the transmission hose (14) at the other end, at least one connector (15) ensuring that the transmission hose (14) is attached partially and the connection hose (1401) is attached almost completely inside the aircraft (F) to each other in a detachable manner in the first state (I), thereby enabling the transfer of the fluid transmitted from the load (2) to the control unit (13).

3. The release mechanism (1) according to claim 2, **characterized in that** it comprises a connector (15) which is pneumatic, having a diameter larger than the diameter of the opening (A), pulled to the opening (A) with the release of the carrying apparatus (3) when the main pin (6) is brought from the first state (I) to the second state (II) by the user, enabling the connection of the transmission hose (14) with the connection hose (1401) to be disconnected and separated from each other by being compressed in the opening (A) due to the diameter difference, thereby enabling the carrying apparatus (3) to be moved away from the aircraft (F) together with the transmission hose (14).

4. The release mechanism (1) according to any one of the preceding claims, **characterized in that** it comprises; a holder (7) which is in the form of a hook, at least one connection apparatus (16) located on the carrying apparatus (3) and enabling the carrying of the load (2) on the body (4) in the first state (I) by mounting the carrying apparatus (3) onto the aircraft (F), at least one recess (17) located on the connection apparatus (16) and enabling the holder (7) to carry the connection apparatus (16) by being attached onto the connection apparatus (16) in a manner to be releasable in the first state (I).

5. The release mechanism (1) according to any one of the preceding claims, **characterized in that** it comprises; a sliding axis (E) on which the main pin (6) is located and which is the direction in which the main pin (6) extends, at least one safety pin (18) located on the holes (5) found on the first bracket (8) and the second bracket (9) in the first state (I), located in a manner to contact the release lever (10), thereby ensuring that the main pin (6) remains fixed in the first state (I).

6. The release mechanism (1) according to claim 5, **characterized in that** it comprises at least one safety trigger lever (19) positioned on the aircraft (F) at a distance accessible by the user, ensuring the removal of the safety pin (18) from the holes (5) by being triggered by the user/pilot, thereby enabling the moving of the release lever (10).

7. The release mechanism (1) according to any one of the preceding claims, **characterized in that** it comprises at least one triggering lever (20) located on the aircraft (F) at a distance accessible by the user, enabling the moving of the release lever (10) by being triggered by the user and/or pilot, thereby enabling the main pin (6) to come from the first state (I) to the second state (II) and the load (2) to be dropped from the aircraft (F).

8. The release mechanism (1) according to any one of the preceding claims, **characterized in that** it comprises at least one stopping pin (21) positioned inside the holes (5) on the first bracket (8) and the second bracket (9) in a manner to be parallel to the main pin (6) on the body (4), enabling the limiting of the movement of the release lever (10) in a range predetermined by the user when the main pin (6) is brought to the second state (II).

9. The release mechanism (1) according to claim 7 or claim 8, **characterized in that** it comprises at least one steel rope (22) located on the aircraft (F), connected to the triggering lever (20) at one end and to the release lever (10) at the other end along the direction in which it extends lengthwise, enabling the rotation of the release lever (10) with the moving of the triggering lever (20) by the user.

10. The release mechanism (1) according to claim 9, **characterized in that** it comprises a steel rope (22) located on the aircraft (F), connected to the safety trigger lever (19) at one end and to the safety pin (18) at the other end along the direction in which it extends lengthwise, enabling the removal of the safety pin (18) from the holes (5) by being moved with the pulling of the safety trigger lever (19) by the user.

11. The release mechanism (1) according to claim 9 or claim 10, **characterized in that** it comprises;
- the separation of the safety pin (18) from the body (4) by coming out of the holes (5) by means of the steel rope (22) with the pulling of the safety trigger lever (19) by the user,
- the triggering lever (20) triggered by being pulled by the user as a result of the separation of the safety pin (18) from the body (4),
- the release lever (10) rotated around the sliding axis (E) on the body (4) by means of the steel ropes (22) with the pulling of the triggering lever (20) to pass from the first state (I) to the second state (II),
- the main pin (6) rotating around the sliding axis (E) simultaneously with the rotation of the release lever (10) and moving linearly along the sliding axis to pass from the first state (I) to the second state (II) with the moving of the release lever (10) from the protrusion surface (11)towards the sliding surface (12),
- the holder (7) rotating around the point where it is connected to the body (4) by coming out of the recess (17) by means of the pulling force applied by the carrying apparatus (3) with the gradual moving of the main pin (6) from the protrusion surface (11) to the sliding surface (12) in the form of a recess, and enabling the linear movement of the main pin (6) along the sliding axis (E),
- the connector (15) enabling the separation of the transmission hose (14) from the connection hose (1401) on the opening (A) with the release of the carrying apparatus (3) and enabling its dropping from the aircraft (F) together with the carrying apparatus (3).

12. The release mechanism (1) according to any one of claims 2 to **11, characterized in that** it comprises a load (2) in which a pitot tube is located, thereby enabling the transfer of the airflow to which it is subjected to the control unit (13).

13. The release mechanism (1) according to any one of the preceding claims, **characterized in that** it comprises an aircraft (F) which is manned and/or unmanned, fixed-wing and/or rotary-wing.
